# EUROPÄISCHE PATENTANMELDUNG

(11) **EP 1 518 839 A1**
(43) Veröffentlichungstag der Anmeldung: **30.03.2005**
(21) Anmeldenummer: 03021584.2
(22) Anmeldetag: 24.09.2003
(51) Int. Cl.: C04B 7/36, G05B 13/02

(54) **Verfahren zum Betrieb einer Zementproduktionsanlage**

(71) Anmelder: Powitec Intelligent Technologies GmbH, 45219 Essen (DE)
(72) Erfinder: Wintrich, Franz, 45309 Essen (DE); Stephan, Volker, Dr., 99976 Hüpstedt (DE)
(74) Vertreter: Patentanwälte Hosenthien-Held und Dr. Held

(57) **Zusammenfassung**

In einem Verfahren zum Betrieb einer Zementproduktionsanlage (1) mit wenigstens einem Fliehkraftabscheider (15) werden die relevanten Zustandsvariablen (Z) des Prozesses in der Zementproduktionsanlage (1) erfaßt und zur Erkennung von bevorstehenden Verstopfern im Fliehkraftabscheider (15) ausgewertet.

## Beschreibung

Die Erfindung betrifft ein Verfahren zum Betrieb einer Zementproduktionsanlage mit wenigstens einem Fliehkraftabscheider.

Bei einem bekannten Verfahren dieser Art wird bei einer Zementproduktionsanlage in einem Fliehkraftabscheider das Rauchgas aus dem Ofen gereinigt und zugleich das dem Ofen zuzuführende Rohmehl erwärmt. Tritt im Fliehkraftabscheider ein Verstopfer auf, wird versucht, durch Rütteln den Verstopfer zu beseitigen. Gelingt dies nicht, muß die Zementproduktionsanlage stillgelegt und der Fliehkraftabscheider für eine Reinigung geöffnet werden. Dies ist aufgrund des Produktionsausfalls sehr kostspielig.

Der vorliegenden Erfindung liegt die Aufgabe zugrunde, ein Verfahren der eingangs genannten Art zu verbessern. Diese Aufgabe wird durch ein Verfahren mit den Merkmalen des Anspruches 1 gelöst. Weitere vorteilhafte Ausgestaltungen sind Gegenstand der Unteransprüche.

Dadurch, daß die relevanten Zustandsvariablen des Prozesses in der Zementproduktionsanlage erfaßt und zur Erkennung von bevorstehenden Verstopfern im Fliehkraftabscheider ausgewertet werden, kann ein Großteil der Verstopfer vermieden werden, was insbesondere in Hinblick auf den durchgehenden Betrieb der Zementproduktionsanlage ohne Abschalten beträchtliche Kostenvorteile bringt. Als Zustandsvariablen werden vorzugsweise verschiedene Massenströme und/oder Konzentrationen und/oder Drücke und/oder Flammencharakteristiken verwendet, die insbesondere die dem Fliehkraftabscheider direkt oder indirekt zugeführten Substanzen einschließlich deren aktuelle thermodynamische Eigenschaften, wie Temperatur und Druck, beschreiben.

Aus den Zustandsvariablen wird vorzugsweise zeitlich fortlaufend eine einzelne charakteristische Größe zur Erkennung eines Verstopfers ermittelt, welche dann vorzugsweise laufend mit einem Schwellwert verglichen wird. Wenn die charakteristische Größe den Schwellwert überschreitet, wird dies als ein bevorstehender Verstopfer ausgewertet, worauf ein Alarm gegeben und/oder automatisch eine Regelung des Prozesses vorgenommen werden kann. Als mögliche Stellgrößen zur Regelung können der Einschaltzustand eines dem Fliehkraftabscheider zugeordneten Rüttlers, der Rohmehlmassenstrom, der Zuschlägemassenstrom, die Brennstoffzufuhrmenge, die Brennerluftzufuhrmenge und/oder die Kühlluftzufuhrmenge verwendet werden, und zwar jeweils einzeln oder in beliebiger Kombination.

Eine entsprechende Vorrichtung zur Regelung der Zementproduktionsanlage umfaßt neben einem Rechner verschiedene Sensoren zur Erfassung der Zustandsvariablen und Stellvorrichtungen zur Änderung der Stellgrößen des Prozesses in der Zementproduktionsanlage, welche zusammen einen Regelkreis bilden. Normalerweise ständig, spätestens jedoch bei einem bevorstehenden Verstopfer, wird mit dieser Vorrichtung eine Regelung des Prozesses in der Zementproduktionsanlage vorgenommen, damit der Prozeß den kritischen Zustand verläßt und der Verstopfer vermieden wird. Vorzugsweise ist auf dem Rechner ein ständig trainiertes neuronales Netz implementiert, welches insbesondere über die Informationen von vergangenen Verstopfern verfügt. Eine Zementproduktionsanlage mit einer derartigen Vorrichtung zur Regelung kann grundsätzlich in an sich bekannter Weise aufgebaut sein.

Im folgenden ist die Erfindung anhand eines in der Zeichnung dargestellten Ausführungsbeispiels näher erläutert. Es zeigen
- Fig. 1: eine schematische Darstellung einer Zementproduktionsanlage, und
- Fig. 2: ein beispielhaftes Zeitverhalten einer charakteristischen Größe, wobei der Bereich markiert ist, in welchem die Stellgrößen geändert wurden.

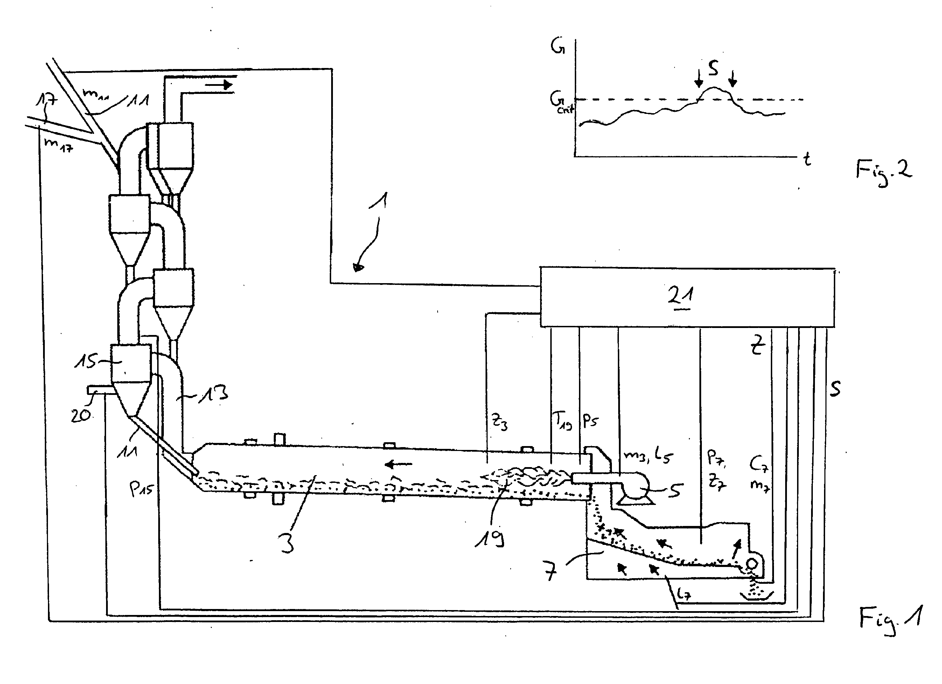

Eine Zementproduktionsanlage 1 weist einen als Drehrohrofen ausgebildeten Ofen 3 mit einem Brenner 5, einen an das untere Ende des geneigten Ofens 3 anschließenden Kühler 7 zum Abkühlen und zur Abfuhr des fertigen Zements, eine an das obere Ende des Ofens 3 anschließende Rohmehlzufuhrleitung 11 zur Zufuhr des Ausgangsmaterials in den Ofen 3, eine ebenfalls an das obere Ende des Ofens 3 anschließende Rauchgasleitung 13 zur Abfuhr der staubigen Abluft und wenigstens einem Fliehkraftabscheider 15 zur Reinigung der staubigen Abluft auf. In der Zeichnung sind fünf als Kaskade geschaltete Fliehkraftabscheider dargestellt. In die Rohlmehlzufuhrleitung 11 mündet auch eine Zuschlägezufuhrleitung 17, durch welche gesonderte Zuschläge, wie Feinton, dem Rohmehl beigegeben werden können. Der Fliehkraftabscheider 15 dient auch als Vorwärmer für das Rohmehl und liegt daher in der Rohmehlzufuhrleitung 11. Das Rohmehl wird durch die Wärme der Abluft aufgewärmt und durch den Staub aus der Abluft angereichert.

Durch geeignete Sensoren laufend erfaßt werden die (als Vektor zu lesenden) Konzentrationen C₇ von NOₓCO, SO₂ und O₂ am Ende des Kühlers 7, der Massenstrom m₇ des fertigen Zements (Klincker) am Ende des Kühlers 7, die Staubkonzentration Z₃ im Ofen 3, die Staubkonzentration Z₇ im Kühler 7, der Druck P₅ am Brenner 5, der Druck p₇ im Kühler 7 und der in der Rohmehlzufuhrleitung 11 am Fliehkraftabscheider 15 gegebenenfalls auftretende Druckabfall p₁₅. Statt den Drücken können auch die Ströme für die Gebläsemotoren oder dergleichen gemessen werden. Ferner wird mit einer Kamera die vom Brenner 5 erzeugten Flamme 19 erfaßt und deren (vektorielle) Flammencharakteristiken T₁₉ ermittelt. Als Stellgrößen S für einen Regelkreis der Zementproduktionsanlage 1 dienen der Rohmehlmassenstrom m₁₁, welche die Zufuhrmenge des Rohmehl beschreibt, der (vektorielle) Zuschlägemassenstrom m₁₇, die Brennstoffzufuhrmenge m₃, welche in vektorieller Form sowohl die Zufuhr von Primärbrennstoff (Kohle) als auch von Sekundärbrennstoffen (Kunststoffe, Abfälle) beschreibt, die Brennerluftzufuhrmenge I₅, die Kühlluftzufuhrmenge I₇ und der Einschaltzustand eines Rüttlers 20 des Fliehkraftabscheiders 15. Die verschiedenen genannten Parameter sind die relevanten Parameter zur Beschreibung den Prezeßzustand des Systems und sind daher im folgenden vektoriell zusammengefaßt als Zustandsvariablen Z bezeichnet.

Ein Rechner 21, auf dem ein neuronales Netz implementiert ist, erhält von den Sensoren die aktuellen Meßdaten, kennt den aktuellen Wert der Stellgrößen S und kann die Stellvorrichtungen zur Änderung der Stellgrößen S ansteuern, d.h. der Rechner 21 kennt die Zustandsvariablen Z des Systems und kann aufgrund einer Prozeßzustandsanalyse eine Regelung der Zementproduktionsanlage 1 vornehmen. Der Rechner 21, die Sensoren und die Stellvorrichtungen bilden eine entsprechende Vorrichtung zur Regelung. Ohne Regelung tritt im Fliehkraftabscheider 15 öfters ein Verstopfer auf, d.h. das Rohmehl verbackt aufgrund des Kontaktes mit dem Rauchgas, beispielsweise bei einem hohen Anteil von freiem Schwefel im Rauchgas, so daß im Extremfall die Zementproduktionsanlage 1 abgeschaltet werden muß, um den Fliehkraftabscheider 15 zu reinigen. Ziel ist es, die Verstopfer möglichst zu vermeiden, d.h mit einer Vorwarnzeit auf einen drohenden Verstopfer hinzuweisen. Durch den Rüttler 20 kann dann der Fliehkraftabscheider 15 wieder gereinigt werden, bevor der Verstopfer auftritt.

Der Rechner 21 ermittelt aus den Zustandsvariablen Z als Funktion der Zeit t eine skalare charakteristische Größe G, welche ständig mit einem Schwellwert G_{crit} verglichen wird. Sobald der Schwellwert G_{crit} überschritten wird, gibt der Rechner 21 eine Warnung ab, worauf beispielsweise der Rüttler 20 automatisch in Betrieb genommen wird. Wenn die charakteristische Größe G wieder unter den Schwellwert sinkt, wird das Rütteln wieder eingestellt. Sinkt die charakteristische Größe G trotz Rütteln nicht, werden eine oder mehrere andere Stellgrößen S geändert, bis schließlich die charakteristische Größe G wieder unter den Schwellwert G_{crit} sinkt.

Vor dem Einsatz zur Regelung wird das neuronale Netz des Rechners 21 anhand von tatsächlich auftretenden Verstopfern trainiert, ohne daß eine Regelung vorgenommen wird. Im Betrieb wird das neuronale Netz weitertrainiert anhand von Verstopfern, die ohne Vorwarnung auftreten.

## Patentansprüche

1. Verfahren zum Betrieb einer Zementproduktionsanlage (1) mit wenigstens einem Fliehkraftabscheider (15), bei dem die relevanten Zustandsvariablen (Z) des Prozesses in der Zementproduktionsanlage (1) erfaßt und zur Erkennung von bevorstehenden Verstopfern im Fliehkraftabscheider (15) ausgewertet werden.

2. Verfahren nach Anspruch 1, **dadurch gekennzeichnet, daß** als Zustandsvariablen (Z) verschiedene Massenströme (m₇, m₁₁, m₁₇, m₃, I₅ , I₇) und/oder Konzentrationen (C₇, Z₃, Z₇) und/oder Drücke (P₅, P₇, P₁₅) und/oder Flammencharakteristiken (T₁₉) verwendet werden.

3. Verfahren nach Anspruch 1 oder 2, **dadurch gekennzeichnet, daß** aus den Zustandsvariablen (Z) eine charakteristische Größe (G) zur Erkennung eines Verstopfers ermittelt wird.

4. Verfahren nach Anspruch 3, **dadurch gekennzeichnet, daß** die charakteristische Größe (G) laufend mit einem Schwellwert (G_{crit}) verglichen wird.

5. Verfahren nach Anspruch 4, **dadurch gekennzeichnet, daß**, wenn die charakteristische Größe (G) den Schwellwert (G_{crit}) überschreitet, ein bevorstehender Verstopfer erkannt wird.

6. Verfahren nach einem der Ansprüche 1 bis 5, **dadurch gekennzeichnet, daß** bei Erkennung eines bevorstehenden Verstopfers eine Regelung des Prozesses vorgenommen wird.

7. Verfahren nach Anspruch 6, **dadurch gekennzeichnet, daß** als Stellgrößen (S) zur Regelung des Prozesses der Einschaltzustand eines dem Fliehkraftabscheider (15) zugeordneten Rüttlers (20), der Rohmehlmassenstrom (m₁₁), der Zuschlägemassenstrom (m₁₇), die Brennstoffzufuhrmenge (m₃), die Brennerluftzufuhrmenge (I₅) und/oder die Kühlluftzufuhrmenge (I₇) verwendet werden.

8. Vorrichtung zur Regelung einer Zementproduktionsanlage (1), welche mit einem Verfahren nach einem der Ansprüche 1 bis 7 betrieben wird, **gekennzeichnet durch** einen Rechner (21), verschiedene Sensoren zur Erfassung der Zustandsvariablen (Z) und Stellvorrichtungen zur Änderung der Stellgrößen (S) des Prozesses in der Zementproduktionsanlage (1), welche zusammen einen Regelkreis bilden, der spätestens bei einem bevorstehenden Verstopfer eine Regelung des Prozesses in der Zementproduktionsanlage (1) vornimmt.

9. Vorrichtung nach Anspruch 8, **dadurch gekennzeichnet, daß** auf dem Rechner (21) ein ständig trainiertes neuronales Netz implementiert ist.

10. Zementproduktionsanlage (1), welche mit einem Verfahren nach einem der Ansprüche 1 bis 7 betrieben wird und einen Ofen (3), wenigstens einen Brenner (5), einen Kühler (7), eine Rohmehlzufuhrleitung (11), eine Rauchgasleitung (13), eine Zuschlägezufuhrleitung (17), wenigstens einem Fliehkraftabscheider (15) und eine Vorrichtung zur Regelung nach Anspruch 8 oder 9 aufweist.
